# EUROPÄISCHE PATENTSCHRIFT

(11) **EP 3 183 632 B1**
(45) Veröffentlichungstag und Bekanntmachung des Hinweises auf die Patenterteilung: **15.04.2020**
(21) Anmeldenummer: 15759633.9
(22) Anmeldetag: 05.08.2015
(51) Int. Cl.: G06F 3/01, H04M 1/725, G06F 3/0346, G08C 17/00, G08C 17/02

(54) **BEDIENVORRICHTUNG UND MOBILES BEDIENGERÄT, INSBESONDERE FÜR EIN ELEKTRONISCHES HAUSHALTSGERÄT**
OPERATOR CONTROL APPARATUS AND MOBILE OPERATOR CONTROL UNIT, IN PARTICULAR FOR AN ELECTRONIC DOMESTIC APPLIANCE
DISPOSITIF DE COMMANDE ET APPAREIL DE COMMANDE MOBILE, EN PARTICULIER POUR APPAREIL MÉNAGER ÉLECTRONIQUE

(30) Priorität: 22.08.2014 DE 102014012629
(43) Veröffentlichungstag der Anmeldung: 28.06.2017
(73) Patentinhaber: Diehl AKO Stiftung & Co. KG, 88239 Wangen (DE)
(72) Erfinder: MAIGLER, Andreas, 88339 Bad Waldsee (DE); FROMMELT, Thomas, 81243 München (DE); LYSZUS, Joachim, 88255 Baindt (DE); STOHR, Ralph, 88299 Leutkirch (DE); FUHGE, Bruno, 88147 Achberg (DE)
(74) Vertreter: Diehl Patentabteilung
(86) Internationale Anmeldenummer: PCT/EP2015/001616
(87) Internationale Veröffentlichungsnummer: WO 2016/026552

(56) Entgegenhaltungen:
- EP-A2- 2 639 672
- EP-A2- 2 733 598
- DE-A1-102013 009 168
- US-A1- 2003 132 974
- US-A1- 2006 172 770
- US-A1- 2013 023 954
- US-A1- 2013 069 985
- Gang Pan ET AL: "GeeAir: a universal multimodal remote control device for home appliances", PERSONAL AND UBIQUITOUS COMPUTING, vol. 14, no. 8, 10 March 2010 (2010-03-10) , pages 723-735, XP55598781, GB ISSN: 1617-4909, DOI: 10.1007/s00779-010-0287-7

## Beschreibung

Die vorliegende Erfindung betrifft eine Bedienvorrichtung für ein elektronisches Haushaltsgerät, ein elektronisches Haushaltsgerät mit einer solchen Bedienvorrichtung sowie ein System aus einer solchen Bedienvorrichtung bzw. einem solchen elektronischen Haushaltsgerät und einem mobilen Bediengerät.

Es ist zum Beispiel aus der DE 20 2009 003 894 U1 oder der DE 10 2013 009 168 A1 bekannt, elektronische Haushaltsgeräte mittels Gesten einer Hand eines Benutzers zu steuern, die von einer entsprechenden Gestenerfassungseinrichtung der Bedienvorrichtung des Haushaltsgeräts erfasst und erkannt werden. Die Gestenerfassungseinrichtungen weisen zu diesem Zweck üblicherweise optische Sensoren oder Kameras auf. Eine solche Gestenerfassungseinrichtung ist beispielsweise aus der EP 2 639 672 A2 bekannt.

Aus der US 2013/0023954 A1 ist eine Fernbedienung für ein durch Gesten steuerbares Hörgerät bekannt, wobei in Fingerspitzen implantierte Tags durch eine Datenschnittstelle erfasst werden und die Gesten der Fingerspitzen ebenfalls durch die Datenschnittstelle anhand der durch die implantierten Tags induzierten Eingangssignale interpretiert werden. Aus der US 2013/0069985 A1 und der EP 2 733 598 A2 ist eine Gestensteuerung in Verbindung mit "Wearables" bekannt, wobei die Gesten durch die mobilen Geräte erfasst und an das zu bedienende Gerät weitergegeben werden. Ferner offenbart der Artikel "GeeAir: a universal multimodal remote control device for home appliances" von Gang Pan et al., Personal and Ubiquitous Computing, Bd. 14, Nr. 8, 10. März 2010, Seiten 723-735, ein mobiles Fernsteuergerät für Haushaltsgeräte, bei dem das Fernsteuergerät einen Joystick oder ein Mikrophon zum Auswählen des zu bedienenden Haushaltsgeräts aufweist und eine Gestenerkennung zur eigenständigen Erfassung von Gesten des Fernsteuergeräts beinhaltet. Eine Gestensteuerung zur Verbesserung der Sicherheit von Geldtransaktionen offenbart die US 2003/0132974 A1.

Der Erfindung liegt die Aufgabe zugrunde, eine komfortable und zuverlässige Bedienung eines elektronischen Geräts mittels Gesten zu ermöglichen.

Diese Aufgabe wird gelöst durch die Lehre der unabhängigen Ansprüche. Besonders bevorzugte Ausgestaltungen und Weiterbildungen der Erfindung sind Gegenstand der abhängigen Ansprüche.

Die Bedienvorrichtung für ein elektronisches Haushaltsgerät gemäß der vorliegenden Erfindung weist eine Bediengeräterfassungseinrichtung zum Erfassen eines mobilen Bediengeräts in der Nähe der Bedienvorrichtung, welche eine Kommunikationsschnittstelle für eine Funkverbindung mit dem mobilen Bediengerät aufweist, wobei die Bediengeräterfassungseinrichtung einen Pairing-Vorgang zwischen der Bedienvorrichtung und dem erfassten mobilen Bediengerät durchführt, eine Gestenerfassungseinrichtung zum Erfassen einer durch das mobile Bediengerät ausgeführten Gestik, und eine mit der Bediengeräterfassungseinrichtung und der Gestenerfassungseinrichtung verbundene Steuereinrichtung zum Steuern des elektronischen Haushaltsgeräts in Abhängigkeit von der durch die Gestenerfassungseinrichtung erfassten Gestik des mobilen Bediengeräts, auf. Bei der erfindungsgemäßen Bedienvorrichtung ist die Gestenerfassungseinrichtung ausgestaltet, um unabhängig vom Pairing-Vorgang innerhalb eines Gestenüberwachungsraums eine Gestik des mobilen Bediengeräts zu erfassen und zu erkennen, und ist die Steuereinrichtung ausgestaltet, um die Gestenerfassungseinrichtung zu aktivieren, nachdem durch die Bediengeräterfassungseinrichtung ein Pairing zwischen der Bedienvorrichtung und dem mobilen Bediengerät hergestellt worden ist.

Mit dieser Bedienvorrichtung besteht die Möglichkeit, in einem ersten Schritt über eine Funkverbindung eine eineindeutige Verbindung bzw. Koppelung zwischen der Bedienvorrichtung und einem entsprechend ausgestatteten mobilen Bediengerät herzustellen (sog. "Pairing") und dann die Bedienung des elektronischen Geräts berührungslos mittels Gesten auszuführen. Durch die eineindeutige Verbindung zwischen Bedienvorrichtung und mobilem Bediengerät kann anschließend die Gestensteuerung des elektronischen Geräts sicher und zuverlässig erfolgen.

Durch die Benutzung des mobilen Bediengeräts sowohl für den Pairing-Vorgang als auch für die Gestensteuerung kann der Benutzer das mobile Bediengerät während des gesamten Bedienvorgangs zum Beispiel in der Hand behalten. Die Bedienung des Geräts wird so für den Benutzer flüssiger und damit komfortabler. Sie bietet dem Benutzer zudem zusätzliche Funktionen seines mobilen Bediengeräts in Zusammenhang mit der Bedienung von Haushaltsgeräten oder anderen steuerbaren Geräten.

Die Erfindung ist insbesondere zum Einsatz mit elektronischen Haushaltsgeräten, wie beispielsweise Kochfeldern, Dunstabzugshauben, Herden, Geschirrspülmaschinen, Wäschebehandlungsgeräten und dergleichen geeignet, ohne dass die Erfindung auf diese Anwendungen beschränkt sein soll.

Bei dem mobilen Bediengerät, dessen Präsenz in der Nähe der Bedienvorrichtung und dessen Gesten erfasst werden sollen, handelt es sich in diesem Zusammenhang grundsätzlich um einen beliebigen Gegenstand, der in der Lage ist, per Funk zu kommunizieren. Diese Eigenschaft zur Funkkommunikation kann dabei bei dem Gegenstand ohnehin bereits vorhanden sein oder kann dem Gegenstand durch ein zusätzliches Funkmodul oder dergleichen verliehen werden. Besonders geeignete mobile Bediengeräte sind in diesem Zusammenhang Multimediageräte (Smartphones, Tablet PCs, etc.), Armbänder, Uhren, Eingabestifte und dergleichen, ohne dass die Erfindung auf die genannten Gerätetypen beschränkt sein soll.

Der Begriff Gestik soll in diesem Zusammenhang jede Art von Bewegung oder Kombination von Bewegungen bezeichnen. Einfache Gesten sind zum Beispiel (horizontale) Wischbewegungen und (vertikale) Auf- und Ab-Bewegungen; komplexere Gesten sind zum Beispiel kreisende Bewegungen, Drehbewegungen, Kippbewegungen und dergleichen.

Für die Funkverbindung kann grundsätzlich eine beliebige Funktechnologie verwendet werden. Vorzugsweise kommen für die Funkverbindung zwischen Bedienvorrichtung und mobilem Bediengerät bekannte funkgesteuerte Systeme auf Basis von WLAN ("Wireless Local Area Network", drahtloses lokales Netzwerk), NFC ("Near Field Communication", Nahfeldkommunikation) oder RFID ("Radio Frequency Identification") zum Einsatz.

Gemäß der Erfindung ist die Gestenerfassungseinrichtung ausgestaltet, um innerhalb eines Gestenüberwachungsraums eine Gestik des mobilen Bediengeräts in der Nähe der Bedienvorrichtung zu erfassen und zu erkennen. Zu diesem Zweck können vorzugsweise bekannte Gestenerfassungseinrichtungen zum Beispiel mit optischen Sensoren oder Kamerasystemen verwendet werden. Die Gestenerfassung erfolgt grundsätzlich unabhängig von und im Anschluss an den Pairing-Vorgang, bei dem das mobile Bediengerät erfasst wird.

Gegenstand der Erfindung ist auch ein elektronisches Haushaltsgerät mit wenigstens einer oben beschriebenen Bedienvorrichtung der Erfindung.

Gegenstand der Erfindung ist auch ein System aus wenigstens einer oben beschriebenen Bedienvorrichtung der Erfindung und wenigstens einem mobilen Bediengerät, das einen Funksender mit einer Kommunikationsschnittstelle für eine Funkverbindung mit der Bedienvorrichtung des elektronischen Haushaltsgeräts aufweist, um das mobile Bediengerät in der Nähe der Bedienvorrichtung erfassen zu können.

Gegenstand der Erfindung ist schließlich auch ein System aus wenigstens einem elektronischen Haushaltsgerät der Erfindung und wenigstens einem mobilen Bediengerät, das einen Funksender mit einer Kommunikationsschnittstelle für eine Funkverbindung mit der Bedienvorrichtung des elektronischen Haushaltsgeräts aufweist, um das mobile Bediengerät in der Nähe der Bedienvorrichtung erfassen zu können.

Bei dem Funksender des mobilen Bediengeräts handelt es sich jeweils wahlweise um einen aktiven Funksender oder einen passiven Funksender. Die Begriffe aktiv und passiv sollen sich in diesem Zusammenhang auf die übliche Terminologie in Zusammenhang mit der RFID-Technik beziehen.

In einer Ausgestaltung der Erfindung weist das mobile Bediengerät zudem eine Speichereinrichtung zum Speichern personalisierter Benutzerdaten auf, welche mit dem Funksender verbunden ist. Bei dieser Ausgestaltung besteht die Möglichkeit, mit oder nach dem Pairing-Vorgang zwischen Bedienvorrichtung und mobilem Bediengerät der Bedienvorrichtung benutzerspezifische Daten (z.B. Voreinstellungen des Geräts, bevorzugte Einstellungen, Berechtigungsstufen, etc.) zu übertragen.

In einer weiteren Ausgestaltung der Erfindung ist das mobile Bediengerät als ein Multimediagerät, wie beispielsweise ein Smartphone, ein Tablet PC, eine intelligente Uhr, etc. ausgestaltet. Derartige Multimediageräte verfügen häufig ohnehin über Funkmodule, die für eine Funkverbindung mit der Bedienvorrichtung geeignet sind.

Obige sowie weitere Merkmale und Vorteile der Erfindung werden aus der nachfolgenden Beschreibung bevorzugter, nicht-einschränkender Ausführungsbeispiele anhand der beiliegenden Zeichnung besser verständlich. Darin zeigen, zum Teil schematisch:
- Fig. 1: ein vereinfachtes Blockschaltbild eines Systems aus einer Bedienvorrichtung und einem mobilen Bediengerät gemäß einem Ausführungsbeispiel der Erfindung;
- Fig. 2: ein vereinfachtes Blockschaltbild eines Systems aus einer Bedienvorrichtung und einem mobilen Bediengerät gemäß einem Vergleichsbeispiel; und
- Fig. 3: ein vereinfachtes Blockschaltbild eines Systems aus einer Bedienvorrichtung und einem mobilen Bediengerät gemäß einem weiteren Vergleichsbeispiel.

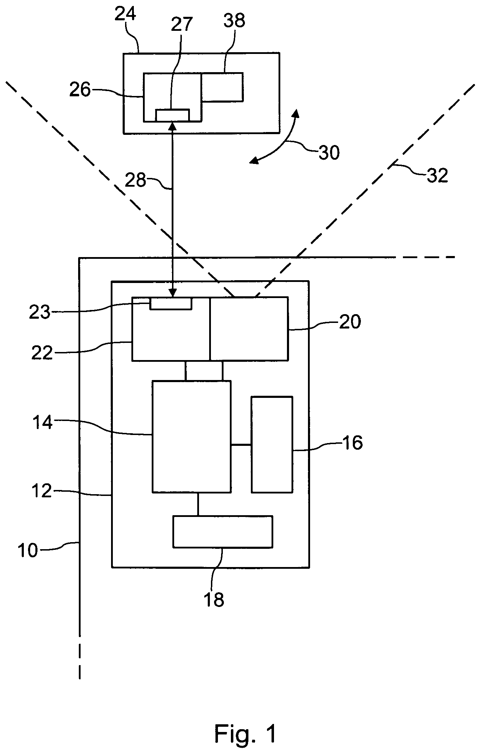

Das in Fig. 1 angedeutete elektronische Haushaltsgerät 10, zum Beispiel ein Kochfeld, weist eine spezielle Bedienvorrichtung 12 auf.

Die Bedienvorrichtung 12 weist eine Steuereinrichtung 14 zum Steuern des Haushaltsgeräts 10 bzw. seiner Aggregate auf. Die Steuereinrichtung 14 enthält zum Beispiel einen Mikrocontroller. Diese Steuereinrichtung 14 ist mit einer Eingabeeinrichtung 16 verbunden, welche zum Beispiel als herkömmliche Eingabeeinrichtung mit berührungs- und/oder annäherungsempfindlichen Tastschaltern (sog. "Touch Control") ausgestaltet ist. Außerdem ist die Steuereinrichtung 14 mit einer Ausgabeeinrichtung 18 verbunden, welche zum Beispiel verschiedene Anzeigevorrichtungen (Displays, Leuchtdioden, etc.) zum Anzeigen von Betriebszuständen, eingestellten Parameterwerten, etc. und/oder verschiedene Akustikvorrichtungen zum Ausgeben von Warn- oder Hinweissignalen aufweist.

Ferner ist die Steuereinrichtung 14 mit einer Gestenerfassungseinrichtung 20 verbunden. Die Gestenerfassungseinrichtung 20 ist ausgestaltet, um innerhalb eines Gestenüberwachungsraums 32 eine Gestik 30 zu erfassen und zu erkennen, die ein Benutzer mit einem mobilen Bediengerät 24 in der Nähe der Bedienvorrichtung 12 ausführt. Bei der Gestik 30, die auf diese Weise erfasst und erkannt werden kann, handelt es sich beispielsweise um einfache (horizontale) Wischbewegungen, einfache (vertikale) Auf- und Ab-Bewegungen, komplexere Kreis-, Dreh- und/oder Kippbewegungen und dergleichen. Die Gestenerfassungseinrichtung 20 weist zu diesem Zweck zum Beispiel optische Sensoren und/oder ein Kamerasystem auf. Für eine Differenzierung von Gesten 30 kann beispielsweise auch die Entfernung von Gestenerfassungseinrichtung 20 und einem Ort im Gestenüberwachungsraum 32, an dem die Gestik 30 ausgeführt wird, herangezogen werden. Eine zusätzliche oder alternative Möglichkeit für die Differenzierung von Gesten 30 kann beispielsweise die Art einer Annäherung sein, insbesondere deren Geschwindigkeit, die Richtung, aus der sich eine Gestik 30 der Gestenerfassungseinrichtung 20 nähert oder eine Anzahl von Wiederholungen einer Gestik 30.

Die Bedienvorrichtung 12 enthält ferner eine Bediengeräterfassungseinrichtung 22 mit einer Kommunikationsschnittstelle 23, über welche sie über eine Funkverbindung 28 mit einem mobilen Bediengerät 24, genauer mit einer Kommunikationsschnittstelle 27 eines Funksenders 26 eines mobilen Bediengeräts per Funk kommunizieren kann.

Die Bedienung des Haushaltsgeräts 10 durch einen Benutzer erfolgt mit Hilfe eines bereits genannten mobilen Bediengeräts 24. Bei dem mobilen Bediengerät 24 handelt es sich zum Beispiel um ein Multimediagerät wie beispielsweise ein Smartphone, ein Tablet PC, eine intelligente Uhr oder dergleichen. Alternativ kann das mobile Bediengerät auch in der Art eines Armbandes, eines Eingabestifts, einer Brille oder dergleichen ausgestaltet sein.

Das mobile Bediengerät 24 weist einen (aktiven oder passiven) Funksender 26 mit einer Kommunikationsschnittstelle 27 auf. So kann der Funksender 26 des mobilen Bediengeräts 24 über eine Funkverbindung 28 mit der Bediengeräterfassungseinrichtung 22 der Bedienvorrichtung 12 kommunizieren.

Optional enthält das mobile Bediengerät 24 zudem eine Speichereinrichtung 38, in welcher personalisierte Benutzerdaten abgespeichert werden können. Bei diesen personalisierten Benutzerdaten handelt es sich beispielsweise um bevorzugte Parameterwerte eines Benutzers, voreingestellte Menüauswahlen eines Benutzers, Sperr- oder Freigabevermerke für einen Benutzer, und dergleichen. Diesbezüglich können zum Beispiel verschiedenen Benutzern unterschiedliche mobile Bediengeräte zugewiesen werden oder können in einem mobilen Bediengerät Benutzerdaten für verschiedene Benutzer hinterlegt und ausgewählt werden.

Es wird nun die Funktionsweise des in Fig. 1 dargestellten Systems aus Bedienvorrichtung 12 und mobilem Bediengerät 24 näher beschrieben.

Bevor der Benutzer mittels Gesten 30 Einstellungen, etc. an der Bedienvorrichtung 12 vornehmen kann, muss ein sog. Pairing-Vorgang durchgeführt werden, um eine eineindeutige Verbindung bzw. Koppelung zwischen der Bedienvorrichtung 12 und dem mobilen Bediengerät 24 herzustellen. Zu diesem Zweck bewegt der Benutzer das mobile Bediengerät 24 in die Nähe der Bedienvorrichtung 12, sodass die Bediengeräterfassungseinrichtung 22 der Bedienvorrichtung 12 per Funk 28 ein Identifikationssignal von dem Funksender 26 empfangen kann (im Fall eines aktiven Funksenders). Enthält das mobile Bediengerät 24 einen passiven Funksender (z.B. passives RFID-Tag), so muss der Funksender 26 zunächst ein Aktivierungssignal von der Bediengeräterfassungseinrichtung 22 empfangen, um dann sein Identifikationssignal an die Bediengeräterfassungseinrichtung 22 zurückzusenden.

Ein erfolgreich abgeschlossener Pairing-Vorgang kann dem Benutzer zum Beispiel durch Ausgabe eines Signaltons oder einer blinkenden LED über die Ausgabeeinrichtung 18 mitgeteilt werden.

Ist ein solcher Pairing-Vorgang abgeschlossen, aktiviert die Steuereinrichtung 14 der Bedienvorrichtung 12 die Gestenerfassungseinrichtung 20. Die aktivierte Gestenerfassungseinrichtung 20 kann dann in dem vorgegebenen Gestenüberwachungsraum 32 eine durch das mobile Bediengerät 24 ausgeführte Gestik 30 erfassen und erkennen. Bevorzugt wird die Gestenerfassungseinrichtung 20 von der Steuereinrichtung 14 nur für einen vorbestimmten Zeitraum aktiviert. Erfasst die Gestenerfassungseinrichtung 20 in dem vorgegebenen Zeitfenster nach dem Pairing-Vorgang eine Geste 30, kann der Aktivierungszeitraum ggf. verlängert werden; andernfalls wird die Gestenerfassungseinrichtung 20 wieder abgeschaltet und müsste über einen erneuten Pairing-Vorgang über die Bediengeräterfassungseinrichtung 22 wieder aktiviert werden.

Nach dem Erkennen einer Gestik 30 durch die Gestenerfassungseinrichtung 20 kann die Steuereinrichtung 14 das Haushaltsgerät 10 bzw. dessen Aggregate in Abhängigkeit von der erkannten Gestik 30 steuern. Diese Steuerung kann beispielsweise das Ein- und Ausschalten von Aggregaten (z.B. Heizzonen, Pumpen, Antriebsmotoren, etc.), das Verändern von Parameterwerten (z.B. Kochstufen, Schleuderdrehzahlen, etc.), das Auswählen von Programmmenüs und dergleichen umfassen. Die Gestenerfassungseinrichtung 20 kann dabei bevorzugt auch mehrere Gesten 30 hintereinander erkennen.

Die durch die Gestik 30 vorgenommenen Einstellungen werden dem Benutzer vorzugsweise über die Ausgabeeinrichtung 18 angezeigt.

Alternativ oder zusätzlich kann der Benutzer auch die Eingabeeinrichtung 16 der Bedienvorrichtung 12 nutzen, um zum Beispiel weitere Einstellungen an der Bedienvorrichtung 12 vorzunehmen. Über die Eingabeeinrichtung 16 ist die Bedienvorrichtung 12 zudem bei Bedarf auch ohne ein entsprechendes mobiles Bediengerät 24 durch einen Benutzer bedienbar.

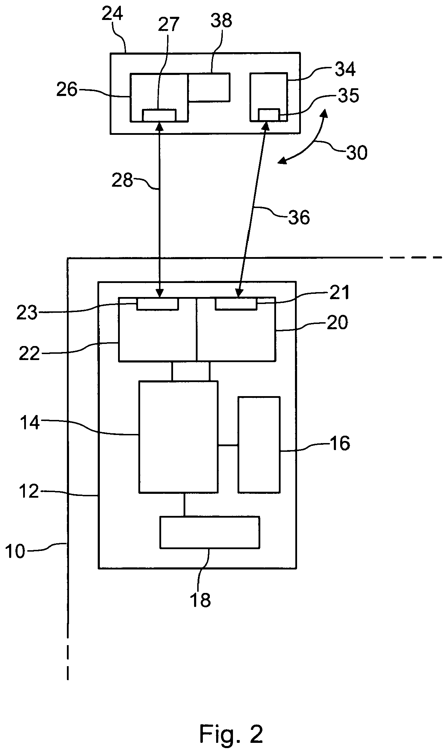

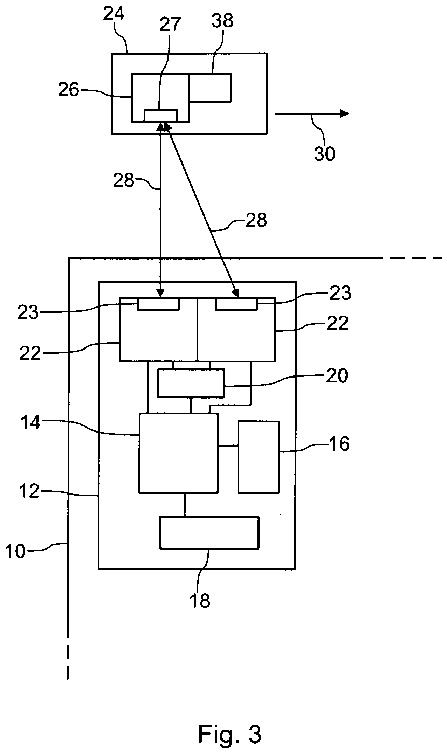

Bezugnehmend auf Fig. 2 und 3 werden nachfolgend Vergleichsbeispiele erläutert, die nicht Gegenstand der vorliegenden Erfindung sind.

Das in Fig. 2 dargestellte System unterscheidet sich von dem Ausführungsbeispiel gemäß Fig. 1 insbesondere durch die Art und Weise der Gestenerfassung und - erkennung.

So weist die Gestenerfassungseinrichtung 20 eine Kommunikationsschnittstelle 21 zum Empfangen von Daten betreffend eine Gestik 30 von dem mobilen Bediengerät 24 über eine Funkverbindung 36 auf. Andererseits ist die Gestenerfassungseinrichtung 20 nicht in der Lage, selbst eine durch das mobile Bediengerät 24 ausgeführte Gestik 30 zu erfassen. Die Gestik 30 wird stattdessen durch eine in dem mobilen Bediengerät 24 vorgesehene Gestenerkennungseinrichtung 34 erfasst und erkannt. Zu diesem Zweck weist die Gestenerkennungseinrichtung 34 zum Beispiel einen oder mehrere Lage- oder Beschleunigungssensoren, bevorzugt für verschiedene Raumrichtungen, sowie eine Kommunikationsschnittstelle 35 zur Funkverbindung 36 mit der Gestenerfassungseinrichtung 20 der Bedienvorrichtung 12 auf.

Wahlweise kann die Bedienvorrichtung 12 auch so modifiziert werden, dass die Bediengeräterfassungseinrichtung 22 und die Gestenerfassungseinrichtung 20 eine gemeinsame Kommunikationsschnittstelle für eine Funkverbindung mit dem mobilen Bediengerät 24 aufweisen. In ähnlicher Weise kann auch das mobile Bediengerät 24 wahlweise so modifiziert werden, dass der Funksender 26 und die Gestenerkennungseinrichtung 34 eine gemeinsame Kommunikationsschnittstelle für eine Funkverbindung mit der Bedienvorrichtung 12 aufweisen.

Außerdem können die Bediengeräterfassungseinrichtung 22 und die Gestenerfassungseinrichtung 20 der Bedienvorrichtung 12 wahlweise auch in einer einzigen Komponente integriert sein.

Im Übrigen entsprechen die Bedienvorrichtung 12 und das mobile Bediengerät 24 dieses Vergleichsbeispiels dem System des Ausführungsbeispiels von Fig. 1.

Hinsichtlich der Funktionsweise des Systems von Fig. 2 erfolgt nach einem erfolgreichen Pairing-Vorgang zwischen der Bediengeräterfassungseinrichtung 22 der Bedienvorrichtung 12 und dem Funksender 26 des mobilen Bediengeräts 24 (wie oben in Zusammenhang mit dem ersten Ausführungsbeispiel näher beschrieben) die Gestenerfassung und -erkennung durch die Gestenerkennungseinrichtung 34 des mobilen Bediengeräts 24. Die Gestenerkennungseinrichtung 34 sendet dann automatisch entsprechende Datensignale über die Funkverbindung 36 an die Gestenerfassungseinrichtung 20 der Bedienvorrichtung 12, die diese an die Steuereinrichtung 14 weitergibt. Hierzu sollte das mobile Bediengerät 24 vorzugsweise im Nahbereich der Bedienvorrichtung 12 verbleiben, in dem auch der Pairing-Vorgang erfolgt ist.

Das in Fig. 3 dargestellte System unterscheidet sich von dem Ausführungsbeispiel gemäß Fig. 1 ebenfalls insbesondere durch die Art und Weise der Gestenerfassung und -erkennung.

So weist die Bedienvorrichtung 12 in diesem Vergleichsbeispiel wenigstens zwei Bediengeräterfassungseinrichtungen 22 auf, die jeweils mit einer Kommunikationsschnittstelle 23 für eine Funkverbindung 28 mit dem Funksender 26 des mobilen Bediengeräts 24 versehen sind. Die wenigstens zwei Bediengeräterfassungseinrichtungen 22 sind vorzugsweise zueinander beabstandet an der Bedienvorrichtung 12 des Haushaltsgeräts 10 positioniert.

Die Gestenerfassungseinrichtung 20 der Bedienvorrichtung 12 ist mit allen Bediengeräterfassungseinrichtungen 22 verbunden. Sie ist zudem ausgestaltet, eine Charakteristik der Pairing-Vorgänge zwischen dem mobilen Bediengerät 24 und den verschiedenen Bediengeräterfassungseinrichtungen 22 der Bedienvorrichtung 12 auszuwerten und daraus eine Gestik 30 des mobilen Bediengeräts 24 zu erkennen.

Im Übrigen entsprechen die Bedienvorrichtung 12 und das mobile Bediengerät 24 dieses Vergleichsbeispiels dem System des Ausführungsbeispiels von Fig. 1.

Hinsichtlich der Funktionsweise des Systems von Fig. 3 können je nach Anzahl der vorhandenen Bediengeräterfassungseinrichtungen 22 mehrere Pairing-Vorgänge zwischen der Bedienvorrichtung 12 und dem mobilen Bediengerät 24 stattfinden (wie oben in Zusammenhang mit dem ersten Ausführungsbeispiel näher beschrieben). Aus der Reihenfolge dieser Pairing-Vorgänge erkennt die Gestenerfassungseinrichtung 20 eine Bewegungsrichtung des mobilen Bediengeräts 24 relativ zur Bedienvorrichtung 12 und wertet dies als Gestik 30.

In einer (nicht dargestellten) Abwandlung des Vergleichsbeispiels von Fig. 3 weist die Bedienvorrichtung 12 nur (genau) eine Bediengeräterfassungseinrichtung 22 mit einer Kommunikationsschnittelle 23. Die Gestenerfassungseinrichtung 20 der Bedienvorrichtung 12 ist in diesem Fall ausgestaltet, eine Charakteristik des Pairing-Vorgangs zwischen dem mobilen Bediengerät 24 und der einen Bediengeräterfassungseinrichtung 22 der Bedienvorrichtung 12 auszuwerten und daraus eine Gestik 30 des mobilen Bediengeräts 24 zu erkennen.

So kann der Benutzer zum Beispiel das mobile Bediengerät 24 mehrmals in die Nähe der Bedienvorrichtung 12 bringen und wieder entfernen. Einerseits entspricht dies mehreren Pairing-Vorgängen, andererseits lassen sich von der Gestenerfassungseinrichtung 20 zum Beispiel die Anzahl der Pairing-Vorgänge, die Geschwindigkeit eines oder mehrerer Pairing-Vorgänge, die zeitlichen Abstände zwischen Pairing-Vorgängen, etc. als Gestik 30 auswerten.

Selbstverständlich sind auch weitere Ausführungsbeispiele der Bedienvorrichtung 12, des mobilen Bediengeräts 24 und des Systems aus Bedienvorrichtung 12 und mobilem Bediengerät 24 innerhalb des durch die anhängenden Ansprüche definierten Schutzbereichs denkbar. Diese ergeben sich beispielsweise durch ein- oder mehrfache Kombinationen der obigen Ausführungs- und Vergleichsbeispiele und deren Modifikationsmöglichkeiten.

### BEZUGSZIFFERNLISTE

- 10: Haushaltsgerät
- 12: Bedienvorrichtung
- 14: Steuereinrichtung
- 16: Eingabeeinrichtung
- 18: Ausgabeeinrichtung
- 20: Gestenerfassungseinrichtung
- 21: Kommunikationsschnittstelle
- 22: Bediengeräterfassungseinrichtung
- 23: Kommunikationsschnittstelle
- 24: mobiles Bediengerät
- 26: Funksender
- 27: Kommunikationsschnittstelle
- 28: Funkverbindung
- 30: Gestik
- 32: Gestenüberwachungsraum
- 34: Gestenerkennungseinrichtung
- 35: Kommunikationsschnittstelle
- 36: Funkverbindung
- 38: Speichereinrichtung

## Patentansprüche

1. Bedienvorrichtung (12) für ein elektronisches Haushaltsgerät, aufweisend:
eine Bediengeräterfassungseinrichtung (22) zum Erfassen eines mobilen Bediengeräts (24) in der Nähe der Bedienvorrichtung (12), welche eine Kommunikationsschnittstelle (23) für eine Funkverbindung (28) mit dem mobilen Bediengerät (24) aufweist, wobei die Bediengeräterfassungseinrichtung (22) einen Pairing-Vorgang zwischen der Bedienvorrichtung (12) und dem erfassten mobilen Bediengerät (24) durchführt;
eine Gestenerfassungseinrichtung (20) zum Erfassen einer durch das mobile Bediengerät (24) ausgeführten Gestik (30); und
eine mit der Bediengeräterfassungseinrichtung (22) und der Gestenerfassungseinrichtung (20) verbundene Steuereinrichtung (14) zum Steuern des elektronischen Haushaltsgeräts (10) in Abhängigkeit von der durch die Gestenerfassungseinrichtung (20) erfassten Gestik (30) des mobilen Bediengeräts (24),
**dadurch gekennzeichnet, dass**
die Gestenerfassungseinrichtung (20) ausgestaltet ist, um unabhängig vom Pairing-Vorgang innerhalb eines Gestenüberwachungsraums (32) eine Gestik (30) des mobilen Bediengeräts (24) zu erfassen und zu erkennen; und
die Steuereinrichtung (14) ausgestaltet ist, um die Gestenerfassungseinrichtung (20) zu aktivieren, nachdem durch die Bediengeräterfassungseinrichtung (22) ein Pairing zwischen der Bedienvorrichtung (12) und dem mobilen Bediengerät (24) hergestellt worden ist.

2. Elektronisches Haushaltsgerät (10), aufweisend wenigstens eine Bedienvorrichtung (12) nach Anspruch 1.

3. System aus wenigstens einer Bedienvorrichtung (12) nach Anspruch 1 und wenigstens einem mobilen Bediengerät (24), das einen Funksender (26) mit einer Kommunikationsschnittstelle (27) für eine Funkverbindung (28) mit der Bedienvorrichtung (12) des elektronischen Haushaltsgeräts (10) aufweist, um das mobile Bediengerät (24) in der Nähe der Bedienvorrichtung (12) erfassen zu können.

4. System aus wenigstens einem elektronischen Haushaltsgerät nach Anspruch 2 und wenigstens einem mobilen Bediengerät (24), das einen Funksender (26) mit einer Kommunikationsschnittstelle (27) für eine Funkverbindung (28) mit der Bedienvorrichtung (12) des elektronischen Haushaltsgeräts (10) aufweist, um das mobile Bediengerät (24) in der Nähe der Bedienvorrichtung (12) erfassen zu können.

5. System nach Anspruch 3 oder 4,
wobei das mobile Bediengerät (24) eine Speichereinrichtung (38) zum Speichern personalisierter Benutzerdaten aufweist, welche mit dem Funksender (26) verbunden ist.

6. System nach einem der Ansprüche 3 bis 5,
wobei das mobile Bediengerät (24) als ein Multimediagerät ausgestaltet ist.

## Claims

1. Operator control apparatus (12) for an electronic domestic appliance, including:
an operator control unit detection device (22) for detecting a mobile operator control unit (24) in the vicinity of the operator control apparatus (12), which operator control unit detection device has a communication interface (23) for a radio connection (28) to the mobile operator control unit (24), wherein the operator control unit detection device (22) carries out a pairing operation between the operator control apparatus (12) and the detected mobile operator control unit (24);
a gesture detection device (20) for detecting gestures (30) performed by the mobile operator control unit (24); and
a control device (14) which is connected to the operator control unit detection device (22) and the gesture detection device (20) and is intended to control the electronic domestic appliance (10) as a function of the gestures (30) of the mobile operator control unit (24) which are detected by the gesture detection device (20),
**characterized in that**
the gesture detection device (20) is configured to detect and recognize gestures (30) of the mobile operator control unit (24) independently of the pairing operation within a gesture monitoring space (32); and
the control device (14) is configured to activate the gesture detection device (20) after a pairing has been established between the operator control apparatus (12) and the mobile operator control unit (24) by the operator control unit detection device (22) .

2. Electronic domestic appliance (10) having at least one operator control apparatus (12) according to Claim 1.

3. System made up of at least one operator control apparatus (12) according to Claim 1 and at least one mobile operator control unit (24) having a radio transmitter (26) with a communication interface (27) for a radio connection (28) to the operator control apparatus (12) of the electronic domestic appliance (10) in order to be able to detect the mobile operator control unit (24) in the vicinity of the operator control apparatus (12).

4. System made up of at least one electronic domestic appliance according to Claim 2 and at least one mobile operator control unit (24) having a radio transmitter (26) with a communication interface (27) for a radio connection (28) to the operator control apparatus (12) of the electronic domestic appliance (10) in order to be able to detect the mobile operator control unit (24) in the vicinity of the operator control apparatus (12).

5. System according to Claim 3 or 4,
wherein the mobile operator control unit (24) has a storage device (38) for storing personalized user data, which storage device is connected to the radio transmitter (26).

6. System according to one of Claims 3 to 5,
wherein the mobile operator control unit (24) is designed as a multimedia device.

## Revendications

1. Arrangement de commande (12) pour un appareil ménager électronique, comprenant : un dispositif de détection d'appareil de commande (22) destiné à détecter un appareil de commande mobile (24) à proximité de l'arrangement de commande (12), lequel possède une interface de communication (23) pour une liaison radioélectrique (28) avec l'appareil de commande mobile (24), le dispositif de détection d'appareil de commande (22) effectuant une opération d'appairage entre l'arrangement de commande (12) et l'appareil de commande mobile (24) détecté ;
un dispositif de détection de gestes (20) destiné à détecter une gestuelle (30) accomplie par l'appareil de commande mobile (24) ; et
un dispositif de contrôle (14) relié au dispositif de détection d'appareil de commande (22) et au dispositif de détection de gestes (20), destiné à contrôler l'appareil ménager électronique (10) en fonction de la gestuelle (30) de l'appareil de commande mobile (24) détectée par le dispositif de détection de gestes (20), **caractérisé en ce que**
le dispositif de détection de gestes (20) est configuré pour, indépendamment de l'opération d'appairage, détecter et reconnaître une gestuelle (30) de l'appareil de commande mobile (24) à l'intérieur d'un espace de surveillance de gestes (32) ; et
le dispositif de contrôle (14) est configuré pour activer le dispositif de détection de gestes (20) après qu'un appairage entre l'arrangement de commande (12) et l'appareil de commande mobile (24) ait été établi par le dispositif de détection d'appareil de commande (22).

2. Appareil ménager électronique (10) comprenant au moins un arrangement de commande (12) selon la revendication 1.

3. Système constitué d'au moins un arrangement de commande (12) selon la revendication 1 et d'au moins un appareil de commande mobile (24), qui possède un émetteur radioélectrique (26) muni d'une interface de communication (27) pour une liaison radioélectrique (28) avec l'arrangement de commande (12) de l'appareil ménager électronique (10) afin de pouvoir détecter l'appareil de commande mobile (24) à proximité de l'arrangement de commande (12).

4. Système constitué d'au moins un appareil ménager électronique selon la revendication 2 et d'au moins un appareil de commande mobile (24), qui possède un émetteur radioélectrique (26) muni d'une interface de communication (27) pour une liaison radioélectrique (28) avec l'arrangement de commande (12) de l'appareil ménager électronique (10) afin de pouvoir détecter l'appareil de commande mobile (24) à proximité de l'arrangement de commande (12).

5. Système selon la revendication 3 ou 4, l'appareil de commande mobile (24) possédant un dispositif de mémorisation (38) destiné à mémoriser des données d'utilisateur personnalisées et qui est relié à l'émetteur radioélectrique (26).

6. Système selon l'une des revendications 3 à 5, l'appareil de commande mobile (24) étant réalisé sous la forme d'un appareil multimédia.
